# EUROPEAN PATENT APPLICATION

(11) **EP 1 416 396 A1**
(43) Date of publication of application: **06.05.2004**
(21) Application number: 02024111.3
(22) Date of filing: 29.10.2002
(51) Int. Cl.: G06F 17/30, G06F 17/21

(54) **Web portal**

(71) Applicant: Tricon Data A/S, 6000 Kolding (DK)
(72) Inventor: Lund, Jorn, 6000 Kolding (DK)
(74) Representative: Gregersen, Niels Henrik

(57) **Abstract**

A web portal on the Internet for a plurality of subscribers, said web portal comprising a plurality of user accessible web pages, each of said web pages being associated with a subscriber and presenting information from said subscriber. The web pages are hosted as sub-pages under a common Internet address for said web portal. Furthermore, the web portal comprises a design tool for the subscribers for editing their associated web page on said web portal.

## Description

### FIELD OF THE INVENTION

The present invention relates to a web portal for a plurality of information providers, for example advertising stores.

### BACKGROUND OF THE INVENTION

Web portals that users may access in order to get information about goods and/or services for purchase are widespread and popular.

Virtual stores for Internet trade are generally known, but as has turned out in many cases, users prefer to visit the physical retail store before actually buying a product. This is because the user normally wants to investigate the product by touch or smell before purchase.

International Patent Application WO 01/03024 by Jensen assigned to Retail Internet discloses a network base transaction system between users having access to the Internet and retail store chains connected to the network, where the chains have retail stores at different geographical locations. The transaction system works in that the user via a computer system sends an inquiry to the control centre after which the control centre forwards this inquiry to the retail store chains connected to the transaction system and which according to a database in the control centre can make a reply to the inquiry with great probability. The retail store chain then sends a reply thereto back to the control centre which forwards this reply together with the address of the retail store in the retail store chain concerned being closest to the user. Through the information sent to the user, e.g., an offer for a certain article, the user is invited to visit the retail store to get further information or for buying the article directly.

This system is optimised for retail store chains in order to find the most convenient location for the customer to pick up the product that the user has chosen to buy from a retail store chain with stores in different geographic locations. The system is not suitable for single stores because this system is not solving the problem of the fact that the user may prefer to travel a larger distance in order to get a cheaper product or in order to visit a single retail store with a different profile. Also, this system is not taking into account, how individual stores in an easy way may display their offers. This system is designed for efficiently finding products in accordance with the wishes of the user and does not include the moment of sensation when strolling through different virtual stores, eventually in a certain category, for example play toys.

Web portals exist where real stores advertise for services or goods on web pages appearing like virtual stores but where the user in order to purchase a product must visit the store. One type of portals has web pages for the different stores where the web pages appear very much alike. This streamlining of the web pages facilitates the orientation of the user during use of the web portal but implies very little excitement for the user. Another type of web portal has links to web pages, which results in appearance of individually designed web pages to the user. However, such web portals are not suited for small stores that may not have the time and money for setting up an individual homepage, which often is a difficult and expensive task.

### DESCRIPTION / SUMMARY OF THE INVENTION

It is therefore the purpose of the invention to provide a web portal for advertisement, which does not have the existing disadvantages.

This purpose is achieved by a web portal on the Internet for a plurality of subscribers, the web-portal comprising a plurality of user accessible web-pages, each of the web-pages being associated with a subscriber and presenting information from the subscriber, the web-pages being hosted as sub-pages under a common Internet address for the web-portal.

Because the web-pages according to the invention are hosted under one web portal, it is possible to give smaller product providers the possibility to have their own web-page without the necessary costs that would be implied if they would have an own homepage with the necessary maintenance.

By a subscriber is to be understood an entity that has a web-page on the web-portal. Normally, these subscribers would pay a certain fee for having their web page hosted as a sub-page under the portal.

In addition, for such smaller entities, where costs as well as time investment for setting up a web page have to be minimised, the web-portal according to the invention foresees that the web portal comprises a design tool for the subscribers for editing their associated web page on the web portal. This feature has the great advantage that a web page design is facilitated and can be done in a very short time. Furthermore, the subscriber does not have to purchase a design tool first and assure that the data standard of the design tool matches the data standard of the web-portal. As the design tool is an integrated part of the web-portal, it is assured that a designed web page also is shown to the user in the right format. Thus, this feature reduces time, effort and cost for the subscriber.

Advantageously, the design tool is configured as a matrix with columns and rows defining sections for containment of information. In this way, the design of the web page follows a certain scheme, which is easy to understand and handle for the subscriber. The information to be contained in the sections may be text, images or even multi media clips. In a further development, the scheme allows for certain creativity in as much as the widths of the columns and the heights of the rows are adjustable. And in order to extend the possibilities for creative web design under these facilitating constraints, the invention foresees, that sections may be combined to form one new combined section.

For the subscriber, the design tool should be user friendly and easy and quick to use. Therefore, in a further embodiment, the design tool is configured to receive information to be contained in a section through a commonly well known drag-and-drop action from the subscriber designing an associated web page. Thus, the subscriber may on the user interface of his computer mark the text to be inserted on the web page, for example by an indication action performed with the computer mouse, and use the same computer mouse in a drag-and-drop action for transferring the information to the section on the web page. Alternatively, the information may be inserted into the section by a copy-and-paste action well-known from common programs and user interfaces.

A great advantage for the user is achieved if the information on the web portal is divided into a plurality of categories, each subscriber belonging to at least one category. In this way, the user may chose among the categories provided this category or those categories that are the most interesting to the user. Thus, the user only receives relevant and for the user attractive information.

A web portal according to the invention may be used in different geographical areas, for example towns, or by different groups, for example Hotels and Restaurants, retail stores, or groups of medical advisers and medicine sellers. Thus, the companies that consider becoming a subscriber of a web portal according to the invention have the opportunity to choose one particular web-portal or several portals according to the particular interests of the company. When becoming a subscriber of a certain portal, the subscriber has the additional possibility of choosing the categories, in which he wishes to display the company's services. Thus, it is possible for larger companies with several and diversified business units to become placed in all the relevant categories.

Subscribers of such a portal may have benefit from sharing experiences and knowledge. Therefore, according to a further development of the invention, the web portal comprises an information forum with discussion groups for sharing subscriber information among the subscribers. Preferably, such a discussion forum may only be accessible by the subscribers. This may be of advantage, if for example the subscribers plan an advertising campaign, which should be a surprise for the users. Though the portal mainly is intended for the subscribers, it may in exceptional cases be of advantage that the portal is configured to also show advertisements of non-subscribers.

For the user, it is of high interest, that the user may only receive advertisements and information from a certain category. Therefore in a further embodiment, the web portal is programmable by any of the users using the web portal, the programming identifying at least one category from which the user may receive information about products and services.

The information to the user may be of commercial nature, for example advertisements. But the information can be of any non-commercial kind, for example information from libraries, government agencies, or public health care.

### SHORT DESCRIPTION OF THE DRAWINGS

The invention will be explained in more detail with reference to the drawing, where
- FIG. 1: is a diagram illustrating the technical means,
- FIG. 2: is a block diagram of the data control centre,
- FIG. 3: is a block diagram of the data store,
- FIG. 4: is a drawing of the user interface,
- FIG. 5: is a drawing of an edited user interface,
- FIG. 6: is another drawing of a edited user interface,
- FIG. 7: illustrates the interaction between the subscribers and the network,
- FIG. 8: illustrates the possibilities for the user,
- FIG. 9: illustrates the booking system.

### DETAILED DESCRIPTION / PREFERRED EMBODIMENT

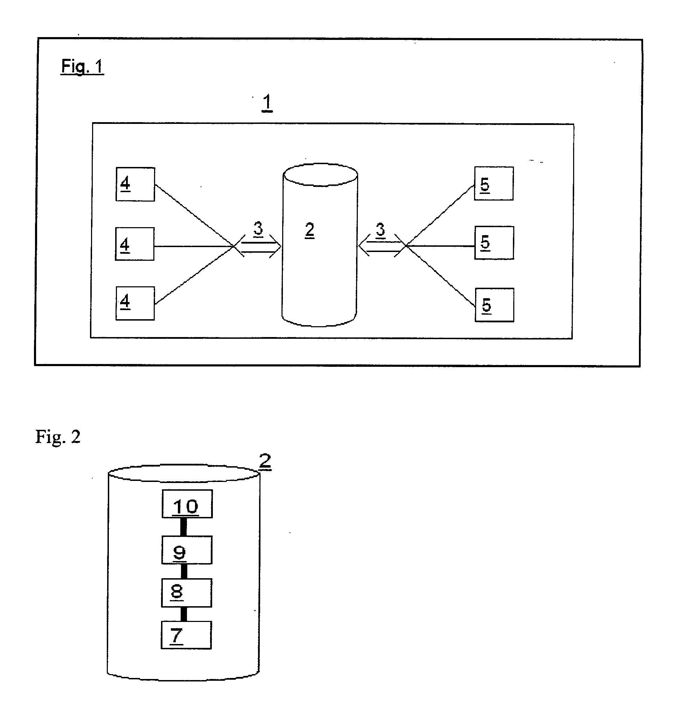

FIG. 1 is a block diagram describing the technical means used for the invention. The preferred embodiment of the invention comprises a technical network which is based on a promotion and business network system 1, between the public users on the one side, who are connected to the system by using electronic apparatuses 4 and the network subscribers on the other side who are also connected to the system by using electronic apparatuses 5. Users as well as subscribers are connected to the control centre 2 via a data network 3. Further, the network subscribers have the possibility to join an interactive network through their own electronic apparatus 5.

By an electronic apparatus is to be understood any electronic apparatus that may communicate with the portal through the Internet network. Such an apparatus may for example be a personal computer or a mobile telephone, for instance a WAP telephone.

FIG. 2 is a block diagram of the data control centre 2 which is a computer system connected to the network. The data control centre comprises a controller 7 (comprising e.g. CPU, ROM), I/O interfaces and I/O devices 8 (e.g. printer, display, keyboard), data store 9 (e.g. RAM, hard disk, CD-ROM, tape) together with other units 10, e.g. modem or net card, which are mutually connected. All communication and data processing in the data control centre 2 is controlled by an operating system (not shown).

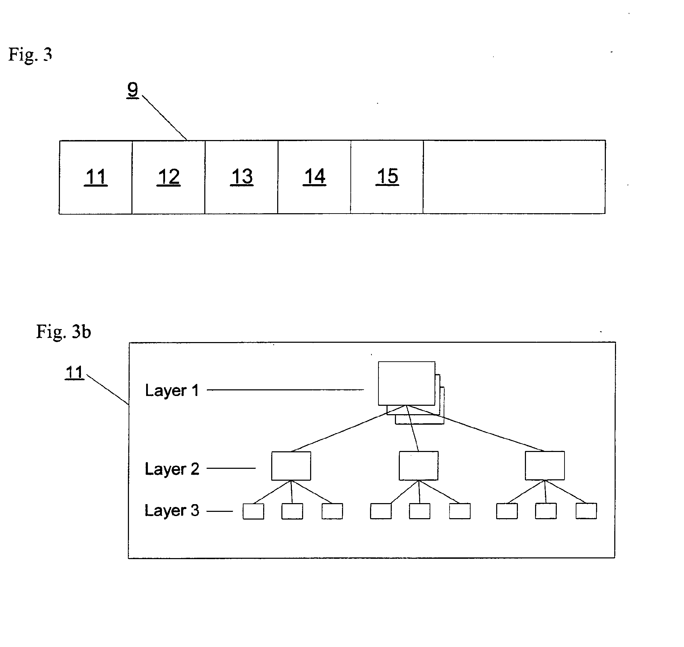

FIG. 3a is a block diagram of the data store 9, comprising e.g. a number of data registers of which some, 11 - 15, are depicted in the diagram. One of the registers is a category register 11 that is used to build clusters from the data provided by a subscriber register 12. The category register 11 is divided hierarchically into different layers as illustrated in FIG. 3b, in which the "top" level/layer preferably is comprised of e.g. city names, such as Kolding, Vejle, Copenhagen etc. The next descendant layer contains preferably the different branches for each of the top level city names, such as "detail", "finance", and "industry". In a lower layer, there could be e.g. a subdivision of the different branches in question. Thus, in the finance branch, the categories could be "banks", "insurance companies", and "accountants".

The subscriber register 12 is used to store data about the subscribers. Each subscriber will then be connected to one or more of the categories in the bottom layer in the category register 11. Thus, it is possible for an internal member to be connected to the categories "banks" and "insurance companies" at the same time if both services are provided. Each of the subscriber's attachment to the various categories will be registered in the category attachment register 13.

The portal site register 14 is used to store the web pages of the subscribers. The data from the web page of each subscriber will be topic-divided following a predetermined list of topics that may be the same for all subscribers. The topics that are registered in the topic-register 15 could be e.g. "Company information", "product information", "offers", "jobs", etc.

In order to place information material onto the relevant/designated web pages of the portal, different help tools, which can be used directly from the portal, have been developed. It is possible to save pre-designed web pages directly into the portal, where they can be made public immediately. Further, there is a possibility to design a new site by using the design tool, which is accessible from the portal.

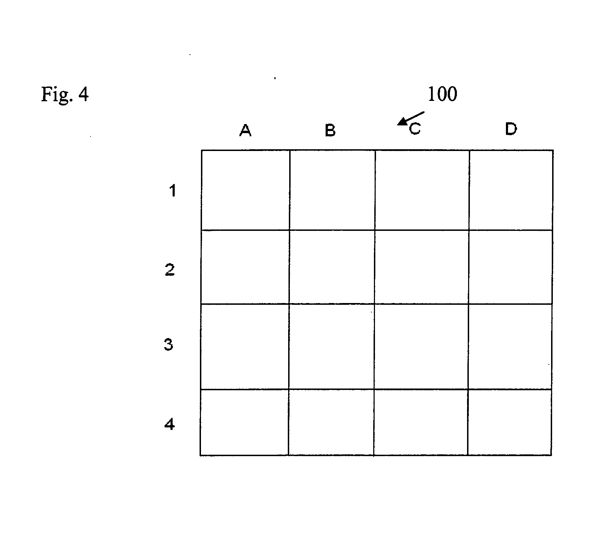

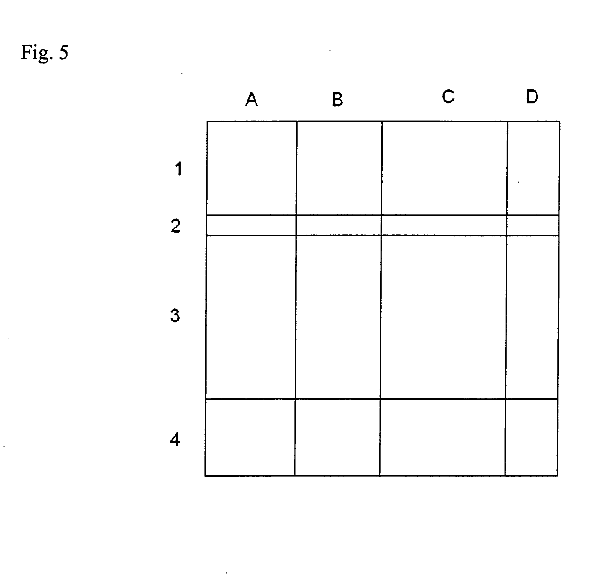

FIG. 4 is a drawing, showing the user surface 100, when the subscriber activates the design tool. The user surface is comprised of a number of columns and a number of rows. The drawing shows four columns A, B, C, and D and four rows numbered 1, 2, 3, and 4. The width of each column and the height of each row are adjustable. The adjustment is done by moving the line/border between either two rows or two columns. FIG. 5 shows how the line between the columns C and D has been moved, and how the line between the rows numbered with 2 and the row numbered with 3 has been moved.

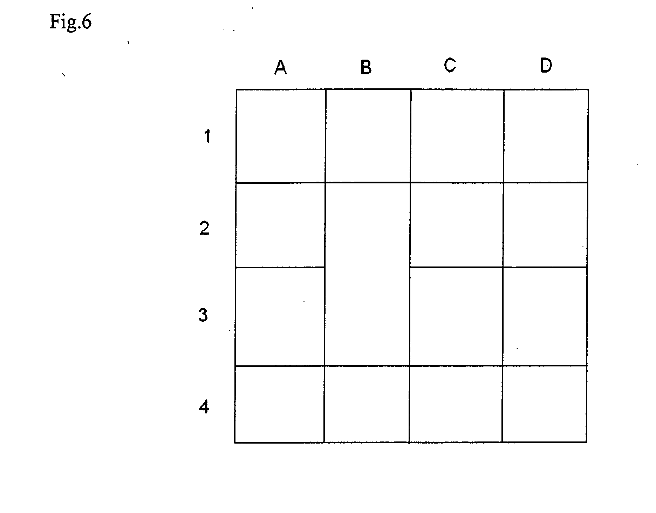

The four rows and the four columns in the example above comprises a matrix of 16 sections A1, A2, A3,....., D3, and D4. The number of columns and rows can be increased or decreased. In addition, merging the sections can decrease the number of sections. Two sections that are adjoined and are either in the same column or row are able to be merged into one section. The result of a merger between such two sections is illustrated in FIG. 6, where the sections B2 and B3 are merged into one section.

Each section in the matrix can have a text, a picture, or a multi media clips attached. The attachment of text may be done by using the built-in text editor. In the text editor, one can insert either copied- or self-produced text, and format it when needed. Insertion of pictures or multi media clips may be done in the following manner: Firstly, one chooses to store the file in question in the data store 9 of the data control centre. In the data store 9, an archive of the stored files will be formed, and thus the archive will enable the user to choose whichever file he/she wishes to attach to the section. When inserting pictures and multi media clips, the size of the picture will be adapted to the size of the section.

Alternatively, text or images may be inserted into the section by a Drag-and-Drop action performed with a computer mouse on the computer screen of the subscriber's computer.

Further, it is possible at all times to adapt the matrix to the user's needs by changing background picture and background color.

When the design stage is completed one can choose to store/save the design as a working copy for later uses, or one can choose to update the public portal at once.

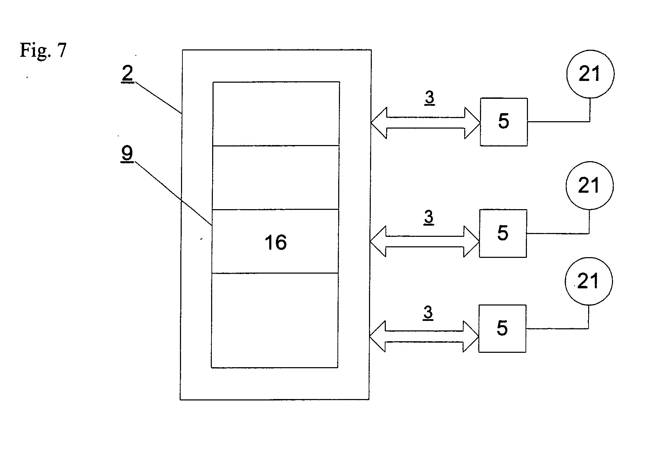

FIG. 7 is a diagram of the interaction between the subscribers in the data network. The picture illustrates how subscribers 21 via the electronic apparatuses 5 are able to communicate with each other via/through the electronic archive 16 of the data store 9. The purpose of the electronic archive 16 is to create a speedy and precise dialogue between the subscribers 21, who wishes to communicate via the data network 3. The speed lies implicitly in the fact that the communication is done on-line. The precise dialogue is achieved by the functions provided by the electronic archive 16. In the following, the interaction between the subscribers 21 is explained in more details.

By approaching the electronic archive 16, a subscriber 21 is able to start a dialogue via his electronic apparatus 5. The subscriber 21 is able to establish a topic, which he wants to discuss with the other subscribers in the whole network 3 or only a limited number of subscribers in a part of the network. Thus, the subscriber in question 21 writes a title for the topic in the electronic archive 16. If another subscriber 21 wants to comment on this topic, this other subscriber may approach the electronic archive 16 via his electronic apparatus 5. A dialogue box will appear, and he may write the text for a comment on the topic.

Further, the electronic archive 16 provides the following possibilities:
- The possibility to mark the message as important
- The possibility to send a copy of the text on e-mail to subscribers
- The possibility to send a copy of the text on e-mail to non-subscribers
- The possibility to schedule a reminder of the text.

Saving the information finishes the establishment of the comment. Thus, all the information regarding the particular topic in question is stored in the electronic archive 16, and the subscribers 21 will always be able to go back and view all the information concerning the topic.

There are foreseen two types of users of the portal according to the invention. One kind of users are public users, which are that type of users that may visit the portal but which have otherwise no further association to the portal. The other type of user are external members of the portal (in contrast to the internal subscribers) and have through this function additional options when using the portal, as will become more apparent in the following.

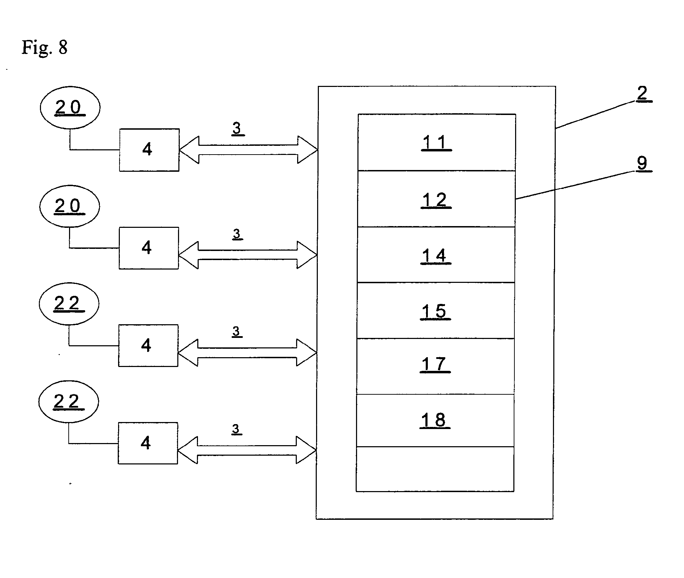

FIG. 8 shows the possibilities that appear to public users 20 if they choose to become external members of the portal. Using an electronic apparatus 4, a user is able to connect to the data control centre 2 via the public data network 3. As an external member 22, the public user is able to view the subscriber's web pages via register 14 just as he was able to as an ordinary public user. However, the external member user has the additional possibility to register in the external member's register 18. As an external member, the user has the possibility to register his areas of interest in the member interest register 17, and thus subscribe to the categories, topics or web pages which are of interest to him. The areas of interest are to be found in the different layers of the category register 11, among the topics in the topic register 15, or among the subscriber's in the subscriber register 12. If changes are made within the areas of interest to a specific external member, this member can be notified of this change.

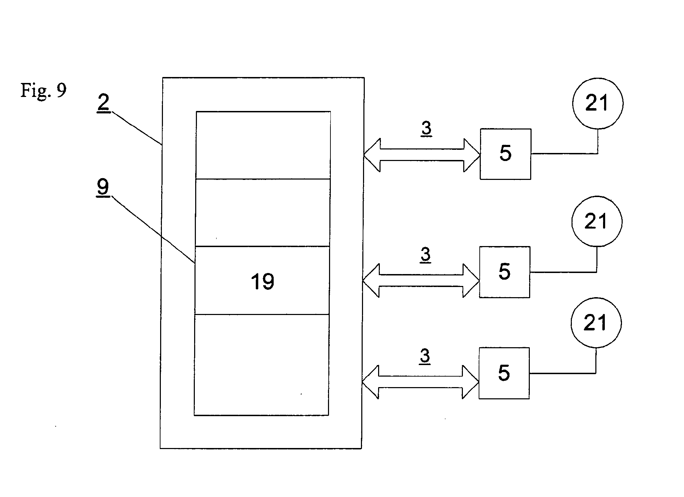

FIG. 9 describes a booking system for banner advertisements. Besides advertising on their respective web pages, it is possible for the subscribers to advertise using the various banners in the portal. The placement of the advertisements is built into a booking system on the server. Thus, it is possible for the subscribers 21 with their electronic apparatus 5, via the data network 3 to connect to the data control centre 2 and thereby register which placement they want their advertisement to have for a certain period of time via the advertisement booking register 19.

In the following, advantages of the web portal will be summarised. The portal is used as a dynamic Internet based page/site that seeks to cover the public user's needs to gather relevant information about companies in a town of the user's own choice. Further, the portal gives the subscribers (= the companies that are members of the portal) an opportunity to market themselves through their own customized page inside the portal.

The public users have direct access through the portal to all the subscribing members of the portal. The subscribers are divided into the relevant categories, and each subscriber has his own site containing a business card, products offered, offers, and a job list. The subscribers control their own site, and they are thus able to edit the whole site whenever they wish - there's no limit to the amount of changes each subscriber wants to make. The only limitation is the amount of data the server is capable to store.

The subscriber pays a one-time fixed amount for access to the above-mentioned possibilities to edit his own site. Thus, the costs will stay at the same level; regardless of how many times the site is edited. To the subscribers, this cost structure is of great importance since they are able to substitute ordinary marketing medias where the costs increase every time a new advertisement placed. Further, there is no time limit for the duration of an offer on the portal. Through ordinary medias, promotions are normally restricted to a certain period of time.

Especially, smaller companies, which may represent a large proportion of the corporate landscape, may experience a big cost advantage with such a portal in case that they only pay a small regular amount for usage of the portal. This amount may be independent of how many times the company changes the content of his portal-site.

The design tool, which the subscribers use to design and edit their own site, is very user friendly and does not require prior programming skills or special education. Further, the tool makes it easy for the subscriber to differentiate his site from that of his competitors, and thereby enabling him to direct the user's focus to his core competencies.

To the subscribers, the portal offers the unique combination of internal (the subscribers in between) and external (the subscribers and the public users in between) interaction, which is not provided by any competing portal.

The public user has the opportunity to subscribe to as many sites as he wishes. He can choose to subscribe to the whole site or one or more of the sub-sites. Whenever the subscriber edits one of the sites or web pages, to which the public user has subscribed, the public user will be informed about the changes directly.

The portal also offers the opportunity to establish a dynamic network between all the subscribers. Practically, this functions in the way that an information forum is created, in which all subjects of interest to the subscribers can be contained. Thus, it is possible for each subscriber to create a subject he wants to discuss with a specified group of people. The advantages of such a system are knowledge sharing, information sharing, easy co-ordination flow etc. Especially for subscribers who do not have so much to offer the public user, this network feature is of major relevance.

To make the portal attractive for larger companies, who are not necessarily subscribers, a booking-system for the regular advertisements is available. Thus, it is possible for the companies to book ahead, e.g. if they wish to support a nation-wide campaign with a local advertisement.

The portal as a whole is very easy to use, and it appears very clear to the public users what possibilities that are available.

In the following, a potential use of the web portal according to the invention will be elucidated, where the use concerns a beneficial combination with sponsoring activities, for example in connection with a sports club.

The background for this combination is to be found in the fact that in the increasingly competitive business environment, it has become more essential than ever for all companies, small as well as large, to consider and weight the company's marketing expenses. Thus, it has become very difficult for sports clubs and other associations to attract sponsors, if they do not provide a unique way to market the sponsor's products. A first attempt made by many sports clubs is the establishment of a sponsor network among all the sponsors in that particular club. However, this network does not work effectively enough, since the sponsors only meet irregularly and it is difficult to communicate effectively with all the relevant sponsors at the same time. Further, the sponsors cannot use the sponsor network to promote their products to the end-users.

On the basis of the reasons presented above, a particular embodiment of the invention concerns an interactive sponsor network in order to make increase the attractiveness of sponsoring clubs instead of using the marketing budget elsewhere. The purpose of the interactive sponsor network is to provide a "new" attractive network for sponsors. The interactive network based on the web portal according to the invention gives the sponsors the opportunity to establish an on-line information forum in which the sponsors are able to discuss any relevant subject at any given time. Furthermore, the web-portal, on which the new sponsor network is placed, allows the sponsors to present their products, their offers, and job advertisements, which is of great benefit for the sponsors. On the other hand, a sports club receives financial means that have been gained from the sponsors for the use of the web portal.

## Claims

1. A web portal on the Internet for a plurality of subscribers, said web portal comprising a plurality of user accessible web pages, each of said web pages being associated with a subscriber and presenting information from said subscriber, ***characterised in that*** said web pages are hosted as sub-pages under a common Internet address for said web portal.

2. A web portal according to claim 1, wherein said web portal comprises a design tool for the subscribers for editing their associated web page on said web portal.

3. A web portal according to claim 2, wherein said design tool is configured as a matrix with columns and rows defining sections for containment of information.

4. A web portal according to claim 3, wherein said widths of said columns and said heights of said rows are adjustable.

5. A web portal according to claim 3 or 4, wherein sections may be combined to form one new combined sections.

6. A web portal according to claim 3, 4, or 5, wherein said design tool is configured to receive information to be contained in a section by a drag-and-drop action from said subscriber designing an associated web page.

7. A web portal according to any previous claim, wherein said information on said web portal is divided into a plurality of categories, each subscriber belonging to at least one category.

8. A web portal according to any previous claim, wherein said web portal comprises an information forum with discussion groups for sharing subscriber information among the subscribers.

9. A web portal according to claim 8, wherein said discussion forum is only accessible by the subscribers.

10. A web portal according to claim 8 or 9, wherein said web portal comprises an electronic archive for storage of information concerning topics for discussion among subscribers.

11. A web portal according to claim 9, wherein particular of said topics are accessible only by subscribers predetermined by particular subscriber that has established said particular topic.

12. A web portal according to any previous claim, wherein said portal is configured to show advertisements of non-subscribers.

13. A web portal according to any previous claim, wherein said web portal is programmable by any of said users using said web portal, said programming identifying at least one category from which said user may receive information about products and services.
